# EUROPEAN PATENT SPECIFICATION

(11) **EP 2 447 137 B1**
(45) Date of publication and mention of the grant of the patent: **12.11.2014**
(21) Application number: 11186434.4
(22) Date of filing: 25.10.2011
(51) Int. Cl.: B62H 5/20, B62J 15/00, B62J 3/00, B62H 5/02

(54) **Mounting structure of antitheft device for saddle-type vehicle**
Montagestruktur mit Diebstahlsicherungsvorrichtung für Sattelfahrzeuge
Structure de montage de dispositif anti-vol pour véhicule à monture de selle

(30) Priority: 27.10.2010 JP 2010241482
(43) Date of publication of application: 02.05.2012
(73) Proprietor: Honda Motor Co., Ltd., Tokyo 107-8556 (JP)
(72) Inventor: Kawai, Kenji, Saitama, 351-0193 (JP); Saito, Shinobu, Saitama, 351-0193 (JP)
(74) Representative: Ilgart, Jean-Christophe

(56) References cited:
- EP-A2- 1 211 170
- JP-A- 2007 008 276
- JP-A- 2009 173 262
- US-A- 5 343 077
- US-B1- 6 236 307

## Description

### [Technical Field]

The present invention relates to a mounting structure of an antitheft device for a saddle-type vehicle.

### [Background Art]

An antitheft device configured to avoid an engine to be started, or to give an alarm when a vehicle such as a motorcycle is about to be stolen or, in order to find a stolen vehicle, to measure a position of the vehicle using a GPS (Global Positioning System) function and transmit obtained positional information of the stolen vehicle to a mobile phone or the like is developed.

As a placement of the antitheft device, above a head lamp, in lower front of a meter device, below the head lamp, between a lower surface of the head lamp and an upper surface of a front fender, or inside a front cowling (for example, Patent Document 1) have been proposed. The closest prior art document US6236307 discloses a mounting structure of an antitheft device for a saddle-vehicle in accordance with the preamble of claim 1.

### [Patent Document]

[Patent Document 1] JP-A-2010-116127

### [Disclosure of Invention]

### [Problem to be Solved by the Invention]

In the Patent Document 1 described above, a storage space or other spaces in a vehicle body can be used effectively by arranging the antitheft device above a front wheel and in front of a steering device and, specifically, tamper-resistance is achieved without being visible from the outside by the placement inside the front cowling.

However, there is a risk that a person who knows where the antitheft device is mounted may dismount or disable the antitheft device using a tool. Therefore, a structure further superior in antitheft properties is desired.

In view of such problems described above, it is an object of the invention to provide a mounting structure of an antitheft device for a saddle-type vehicle superior in antitheft properties and, in addition to provide a mounting structure of an antitheft device of a saddle-type vehicle which allows effective utilization of a space in a vehicle body and ensures reliability of the device.

### [Means for Solving the Problem]

In order to achieve the object of the invention, the invention according to Claim 1 provides a mounting structure of an antitheft device for a saddle-type vehicle used for a saddle-type vehicle comprising: a steering device having a handle and configured to steer a front wheel; a mudguard provided on the steering device over an upper portion of the front wheel; and a front body having a hole portion in which the steering device is steerably and loosely inserted so as to face the front wheel and a space in the interior thereof, characterized in that an antitheft device body is accommodated in the space, and the antitheft device body is arranged on the side to which a front portion of the mudguard approaches when the steering of the handle is locked.

And in that the front body includes an inner cover formed with the hole portion in which the steering device is steerably and loosely inserted, the hole portion being formed with so as to face the front wheel, a rear cover provided rearward of the inner cover, and an outer cover provided sideward of the inner cover and the rear cover, and the space is defined by the inner cover, the rear cover, and the outer cover the front portion 22 of the mudguard 21 covers the hole portion 41 and the antitheft device body 60 in the direction of height.

The invention according to Claim 2 is characterized in that the mudguard is fixed to the upper side of a spring of a shock absorber provided on the steering device and the mudguard is provided at a position substantially corresponding to a heightwise position of the hole portion.

The invention according to Claim 3 is characterized in that the antitheft device body is arranged in a front swelled portion provided in the space.

The invention according to Claim 4 is characterized in that the antitheft device body is fixed to an inner surface of the rear cover.

The invention according to Claim 5 is characterized in that an on-vehicle component is accommodated in a lower portion of the space, and the antitheft device body is arranged in an upper portion of the space.

The invention according to Claim 6 is characterized in that the on-vehicle component is a radiator, the inner cover is formed with a vent hole on a lower portion thereof, and the antitheft device body is arranged upward of a position of the vent hole.

### [Advantages]

According to the mounting structure of the antitheft device used for the saddle-type vehicle described in Claim 1 of the invention, the front portion of the mudguard covers the hole portion when the steering of the handle is locked so that a hand cannot enter the hole portion from the locked side, thereby preventing the antitheft device body from being removed or disabled.

According to the mounting structure of the antitheft device used for the saddle-type vehicle described in Claim 2 of the invention, the antitheft device body can be mounted by utilizing the space defined by the inner cover, the rear cover, and the outer cover, so that an antitheft preventing property is improved by accommodating the antitheft device body in the closed space.

According to the mounting structure of the antitheft device used for the saddle-type vehicle described in Claim 3 of the invention, since the heightwise positions of the mudguard and the hole portion do not change even when the front wheel is moved upward and downward with respect to the front body, so that the antitheft property using the mudguard is secured.

According to the mounting structure of the antitheft device used for the saddle-type vehicle described in Claim 4 of the invention, the space in the front body can be used effectively.

According to the mounting structure of the antitheft device used for the saddle-type vehicle described in Claim 5 of the invention, a mounting operation of the antitheft device body can be performed easily by fixing the antitheft device body to the rear cover and assembling the rear cover to the outer cover.

According to the mounting structure of the antitheft device used for the saddle-type vehicle described in Claim 6 of the invention, the entire space can be utilized effectively by accommodating the antitheft device body in the upper portion while avoiding the lower portion of the space where the on-vehicle component is stored.

According to the mounting structure of the antitheft device used for the saddle-type vehicle described in Claim 7 of the invention, since the antitheft device body is arranged at a position away from the radiator which diffuses heat, the antitheft device body is prevented from receiving heat from the radiator side, and from being affected by rain or wind entering through the vent hole, whereby reliability of an operation of the antitheft device body is secured.

### [BRIEF DESCRIPTION OF THE DRAWINGS]

Fig. 1 is a front view showing Example 1 of an embodiment.
Fig. 2 is a front view showing a state in which a front wheel is locked from steering according to Example 1 of the embodiment.
Fig. 3 is a side view of a front portion of a vehicle body according to Example 1 of the embodiment.
Fig. 4 is a side view of the front portion of the vehicle body showing a state in which the front wheel is locked from steering according to Example 1 of the embodiment.
Fig. 5 is a cross-sectional plan view of the front portion of the vehicle body according to Example 1 of the embodiment.
Fig. 6 is a cross-sectional plan view of the front portion of the vehicle body showing a state in which the front wheel is locked from steering according to Example 1 of the embodiment.
Fig. 7 is a perspective view of an upper portion of the front portion of the vehicle body with a center handle cover removed therefrom according to Example 1 of the embodiment.
Fig. 8 is a perspective view of the front portion of the vehicle body according to Example 1 of the embodiment.
Fig. 9 is a perspective view of inner surfaces of an inner cover and an outer cover according to Example 1 of the embodiment.
Fig. 10 is a block diagram of an antitheft device according to Example 1 of the embodiment.
Fig. 11 is an exploded perspective view of a main body of the antitheft device and a mounting member according to Example 1 of the embodiment.
Fig. 12 is a front view of the main body of the antitheft device and the mounting member according to Example 1 of the embodiment.
Fig. 13 is a side view of the main body of the antitheft device and the mounting member according to Example 1 of the embodiment.
Fig. 14 is a plan view of the main body of the antitheft device and the mounting member according to Example 1 of the embodiment.
Fig. 15 is a perspective view of the front portion of the vehicle body with a rear cover removed according to Example 1 of the embodiment.
Fig. 16 is an explanatory perspective view showing a mounting method of the main body of the antitheft device according to Example 1 of the embodiment.
Fig. 17 is a perspective view of the front portion of the vehicle body according to Example 1 of the embodiment.

### [Best Mode for Carrying Out the Invention]

Referring now to the drawings, Example 1 of a mounting structure of an antitheft device for a saddle-type vehicle according to the invention will be described.

### [Example 1]

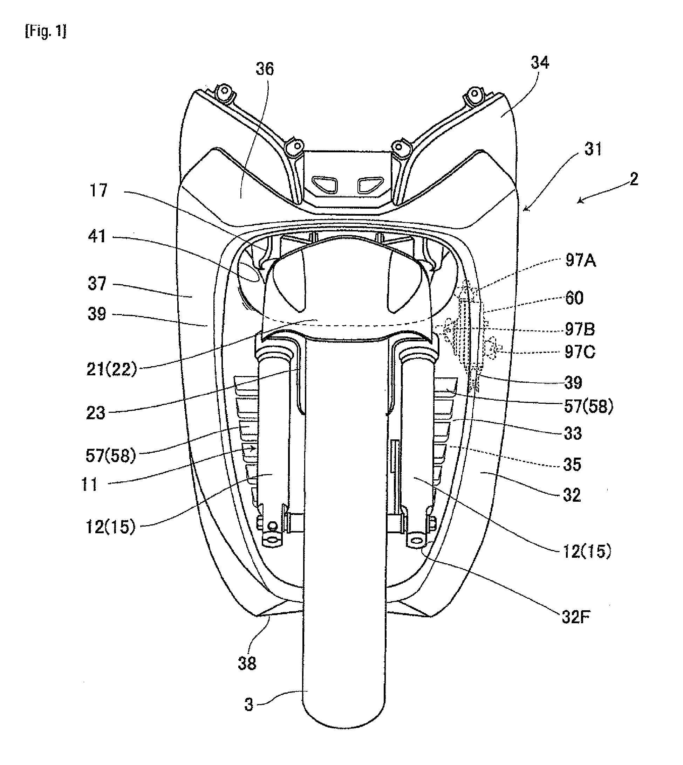

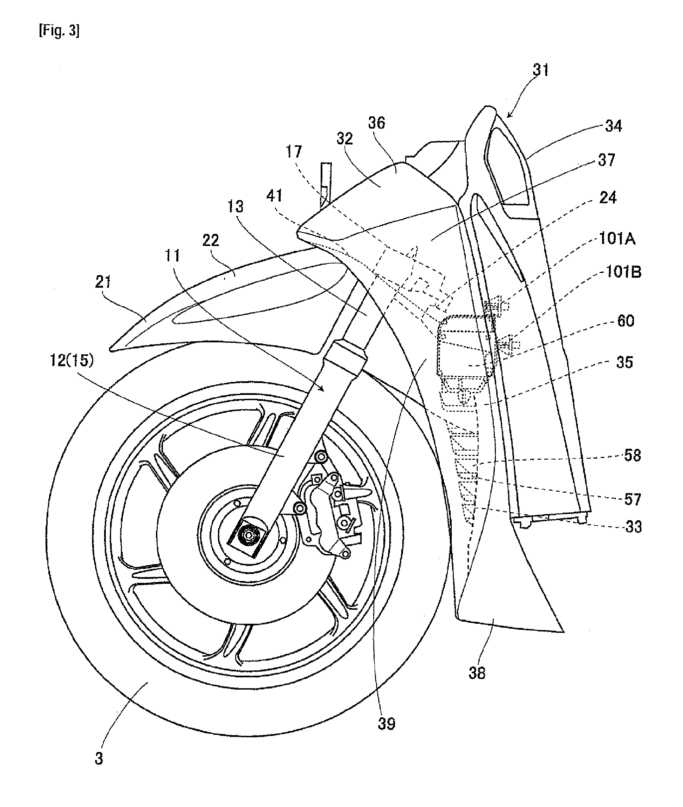

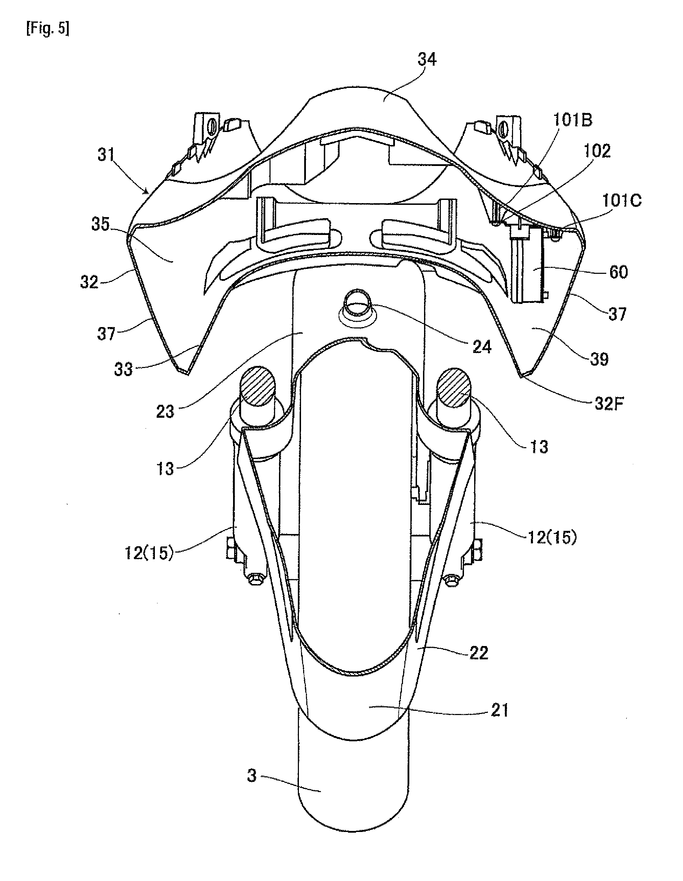

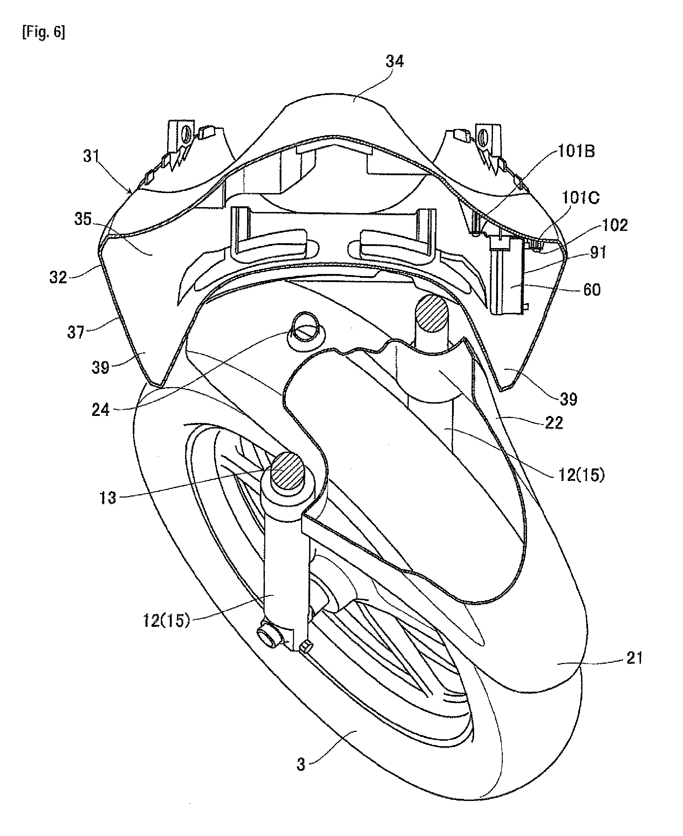

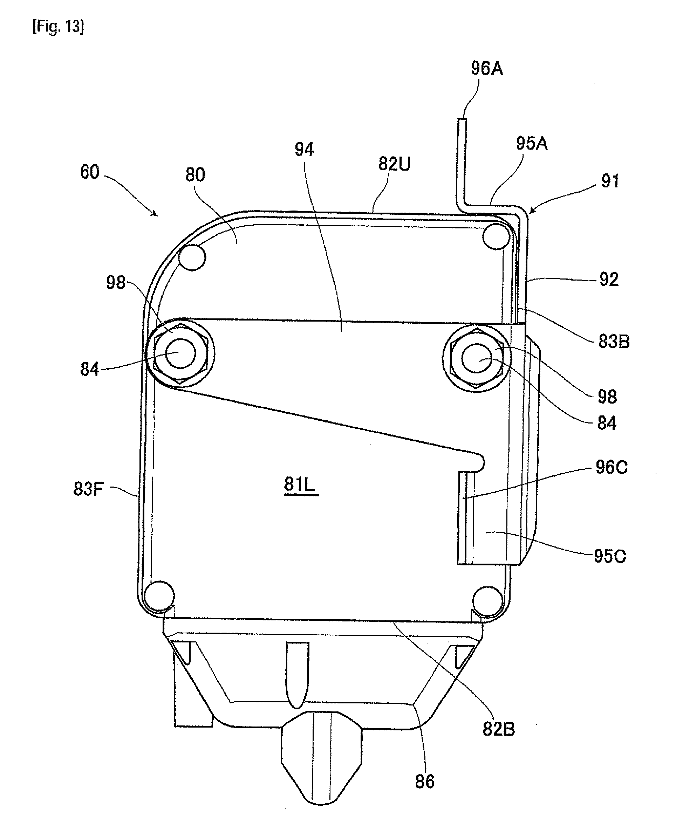

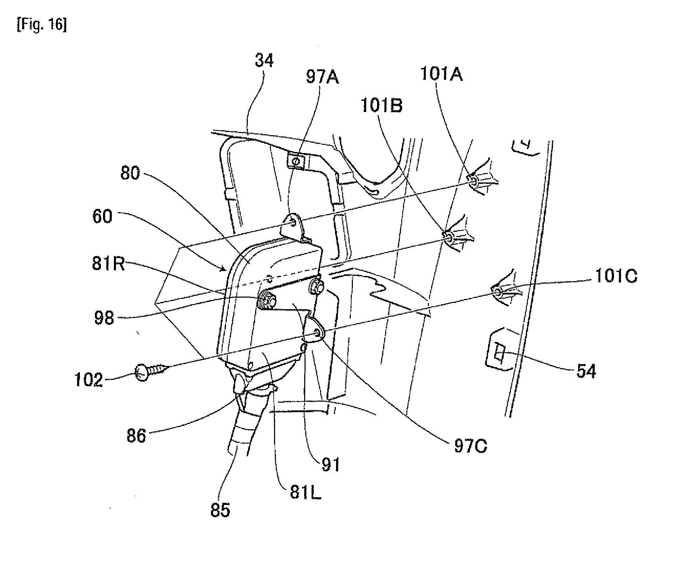

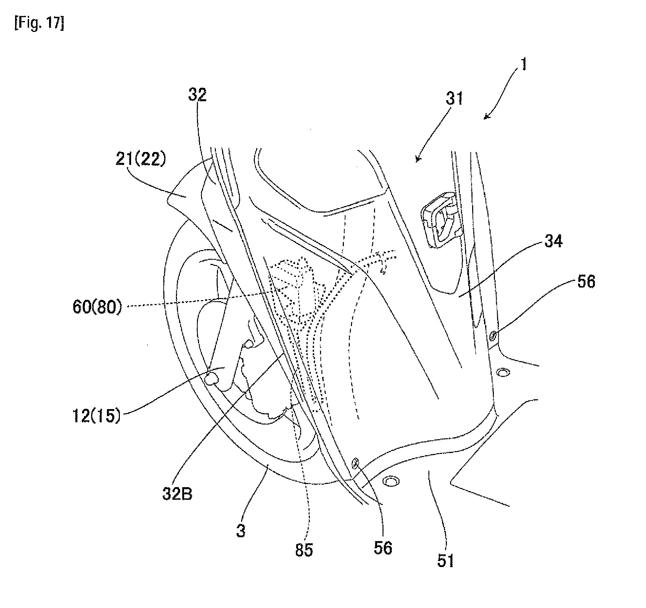

As shown in Figs. 1 to 17, a motorcycle (saddle-type vehicle) 1 of a scooter type includes a front wheel 3 and a rear wheel in the front and back of a vehicle body 2 and is configured to travel by driving an engine using fuel in a fuel tank.

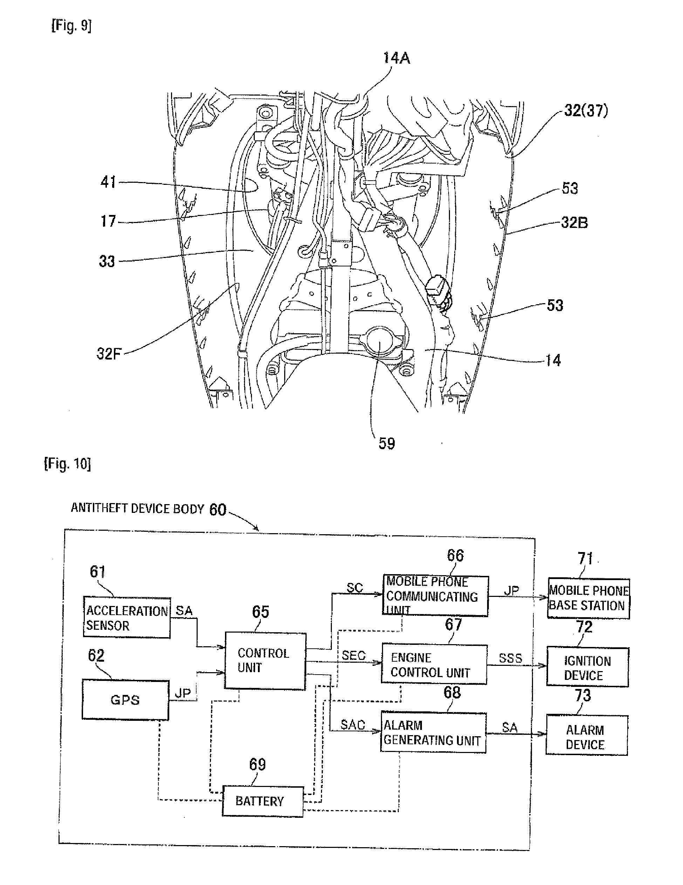

Provided in the front of the vehicle body 2 is a steering device 11, and the steering device 11 including a front fork 12, and a bar handle 13 as a handle coupled to the front fork 12 is steerably supported by a head pipe 14A of a body frame 14 (see Fig. 9).

The front fork 12 includes cylindrical lower cases 15 configured to support the front wheel 3 at lower end portions thereof and upper cases 16 to be fitted into the lower cases 15 on both sides thereof, and is configured to be expandable. The pair of upper cases 16, 16 are coupled by a steering stem 17 between upper portions thereof, a stem pipe extends upward through the head pipe 14A at the center of the steering stem 17, and the bar handle 13 is coupled to an upper end of the stem pipe. Then, the lower cases 15 and the upper cases 16 constitute a shock absorber configured to damp vibrations transmitted from the front wheel 3 to the body frame 14 in cooperation with one or both of springs or dampers.

The steering device 11 includes a mudguard 21 configured to cover an upper portion of the front wheel 3, and the mudguard 21 formed of synthetic resin integrally includes a front portion 22 and a rear portion 23 positioned in the front and rear of the front fork 12. The front portion 22 is formed to be larger than the rear portion 23, and the rear portion is fixed to the steering stem 17 by a fixing portion 24.

In this manner, the mudguard 21 is fixed to the steering stem 17, which corresponds to upper portions of the springs of the shock absorber, so that a heightwise position is kept at the same level as a front body, described later, irrespective of the vertical movement of the front wheel 3.

Provided on the front portion of the vehicle body 2 is a front body 31 formed of synthetic resin, and the front body 31 is fixed to the body frame 14. The front body 31 include an outer cover 32 configured to cover an upper center portion, left and right portions, and a lower portion of the steering device 11, an inner cover 33 provided on a front opening 32F of the outer cover 32, and a rear cover 34 provided on a rear opening 32B of the outer cover 32, and a closed space 35 is defined by the inner cover 33, the outer cover 32, and the rear cover 34.

The outer cover 32 integrally includes an upper surface portion 36 inclined downward toward the front, left and right side surface portions 37, 37 provided on left and right outside of the upper surface portion 36, and a lower surface portion 38 coupling lower portions of the left and right side surface portions 37, 37 and, as shown in Fig. 1 to Fig. 5, has a shape reducing toward the front, includes the vertically elongated front opening 32F formed on the front portion, and is provided with the inner cover 33 so as to close the front opening 32F.

The inner cover 33 is formed so as to be depressed rearward, and is secured at a peripheral edge thereof to the front opening 32F. Provided on an upper portion of the inner cover 33 is a hole portion 41 to allow insertion of an upper portion of the steering device 11, and the hole portion 41 has a size which allows steering of the steering device 11.

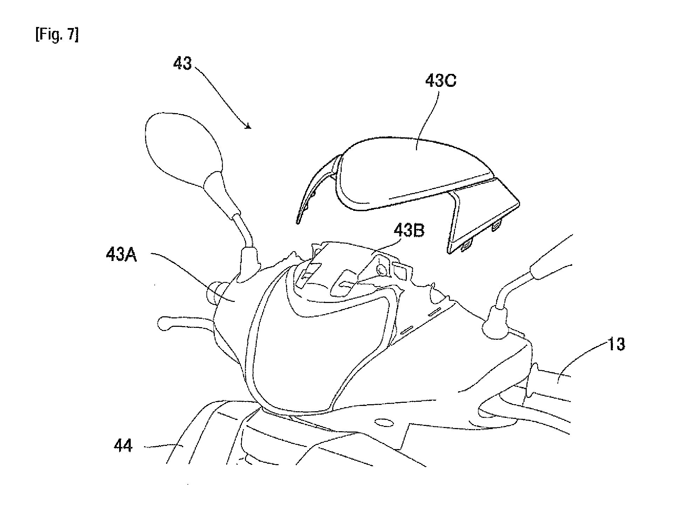

As shown in Fig. 7, a handle cover 43 is provided on an upper portion of the front body 31, and the handle cover 43 includes a front handle cover 43A and a rear handle cover 43B configured to cover the bar handle 13 from the front and rear, and a center handle cover 43C provided on an upper portion of the front and rear handle covers 43A, 43B. A front portion front cover 44 is provided on a front upper portion of the outer cover 32.

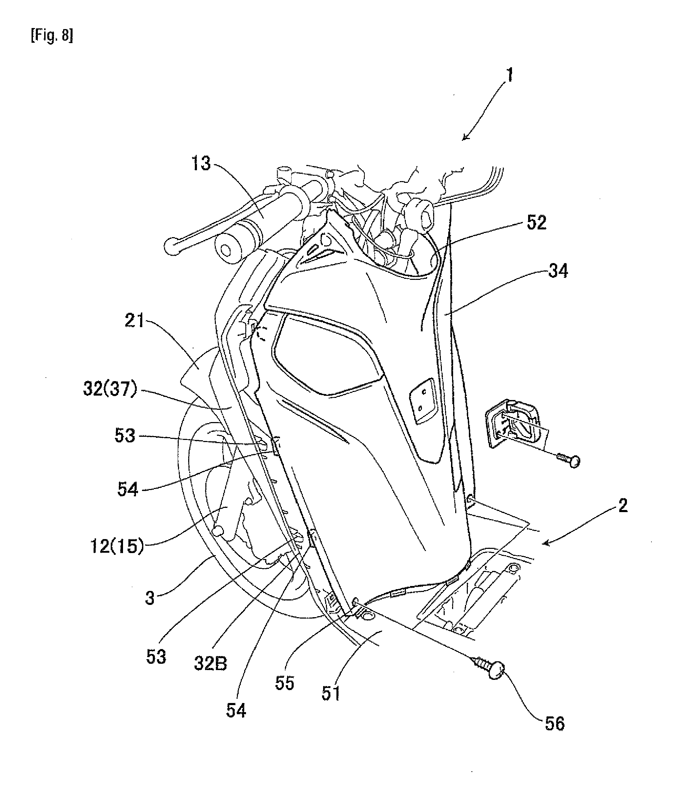

Fig. 8 is a perspective view of a front portion of the vehicle body 2 with the handle cover 43 and the front cover 44 removed, and the rear cover 34 closes the rear opening 32B of the outer cover 32 and a lower portion thereof is fixed to an upper portion of a step floor 51. Formed on an upper portion of the rear cover 34 is an insertion portion 52 opened in the front, and a base portion of the bar handle 13 extending in the vertical direction is inserted into the insertion portion 52. Provided inside of an edge portion of the rear opening 32B is a locking claw 53 as a locking portion, and a locked portion 54 with which the locking claw 53 is disengageably engaged is provided inside of an edge portion of the rear cover 34. Then, the plural locking claws 53 and the plural locked portions 54 are provided, and the rear cover 34 is demountably mounted to the outer cover 32 by engaging the locking claws 53 with the locked portions 54, inserting screws 56 as fixing means into through holes 55 of the rear cover 34, and screwing the screws 56 into the outer cover 32.

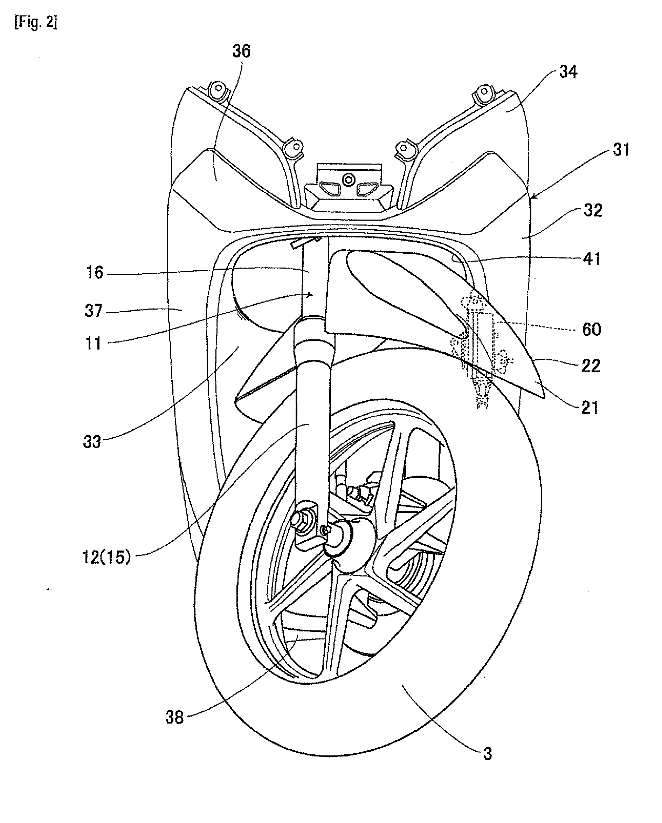

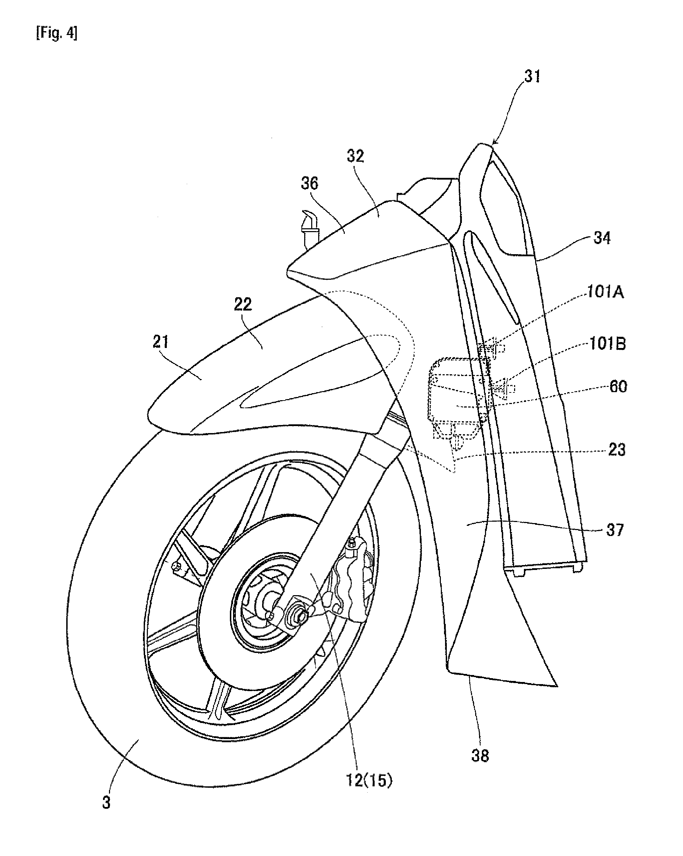

The upper portion of the inner cover 33 is provided so as to cover above a portion from the rear side of the front portion 22 to the rear portion 23 of the mudguard 21, while a lower portion of the inner cover 33 extends to the side of a lower portion of the front wheel 3, and includes plural vent holes 57 on the left and right side from the center in the height direction to the lower portion. Provide on rear portions of the vent holes 57 are plate-shaped guiding portions 58 configured to guide air or the like entered from the front of the vent holes 57 downward, and the guiding portions 58 are inclined so that the vent holes 57 extend away from the upper side to the lower side. Then, a radiator 59 as an on-vehicle component is accommodated in a lower portion of the space 35 so that air entering from the vent holes 57 during travel cools the radiator 59. The air entering from the vent holes 57 is discharged below the step floor 51. In Fig. 2 and Fig. 4, the vent holes 57 and the guiding portions 58 are not illustrated.

As shown in Figs. 1, 3 and 5, front swelled portions 39, 39 projecting toward the front are provided on the left and right of the space in the front body 31, and a front portion of an antitheft device body 60 is accommodated in the front swelled portion 39 on the left side in the direction in which the bar handle 13 is oriented when the steering of the bar handle 13 is locked. In other words, the left side of the space 35 is a side where the front portion 22 of the mudguard 21 approaches the hole portion 41 when the steering of the bar handle 13 is locked. The antitheft device body 60 is accommodated on the left side of the space 35 and the antitheft device body 60 is arranged on an upper portion of the space 35.

As shown in Fig. 10, the antitheft device body 60 includes an acceleration sensor 61 configured to sense vibrations exerted on the vehicle body 2 of the motorcycle 1, a GPS (Global Positioning System) 62 configured to measure a current position of the vehicle by receiving orbit information from plural earth satellites, a control unit 65 configured to give an instruction of an antitheft measure by receiving an acceleration signal SA from the acceleration sensor 61 and a positional information JP from the GPS 62, a mobile phone communicating unit 66 configured to transmit the positional information JP to a mobile phone base station 71 on the basis of a communication instruction SC from the control unit 65, an engine control unit 67 configured to stop an operation of an ignition device 72, that is, to stop an engine by sending an ignition stop signal SSS to the ignition device 72 of the engine on the basis of an engine control signal SEC from the control unit 65, an alarm generating unit 68 configured to operate a lamp and a horn by sending an alarm signal SA to alarm devices 73 (lamps such as a head lamp, blinkers, a tail lamp, and a horn) on the basis of an alarm control signal SAC from the control unit 65, and a battery 69 configured to supply electric power to the GPS 62, the control unit 65, the mobile phone communicating unit 66, the engine control unit 67, and the alarm generating unit 68, and the power can be supplied to the GPS 62, the control unit 65, the mobile phone communicating unit 66, the engine control unit 67, and the alarm generating unit 68 also from a battery (not shown) on the side of the vehicle body 2. The GPS 62 and the mobile phone communicating unit 66 respectively include communication antennas, and respective configurations of the antitheft device body 60 described above including these antennas are accommodated in a single case 80. The engine control unit 67 described above may be configured to control the ignition device 72 via an engine control unit provided on the motorcycle 1.

As shown in Fig. 10 to Fig. 14, for example, the case 80 of the antitheft device body 60 is formed into a substantially box shape, and is fixed to an inner surface of the rear cover 34 by a mounting member 91 formed of metallic plate material. The lateral dimension between left and right side surfaces 81L, 81R of the case 80 is smaller than the vertical dimension between upper and lower surfaces 82U, 82B and the fore-and-aft dimension between front and rear surfaces 83F, 83B, and the vertical dimension is larger than the fore-and-aft dimension in a mounted state. A harness 85 to be connected to an on-vehicle power source is provided on the lower surface 82B, and the left side surface 81L, which is one of the left and right side surfaces 81L, 81R is provided with male screws 84, 84 so as to project therefrom to the front and rear. The harness 85 is electrically connected to the antitheft device body 60 by a connector 86.

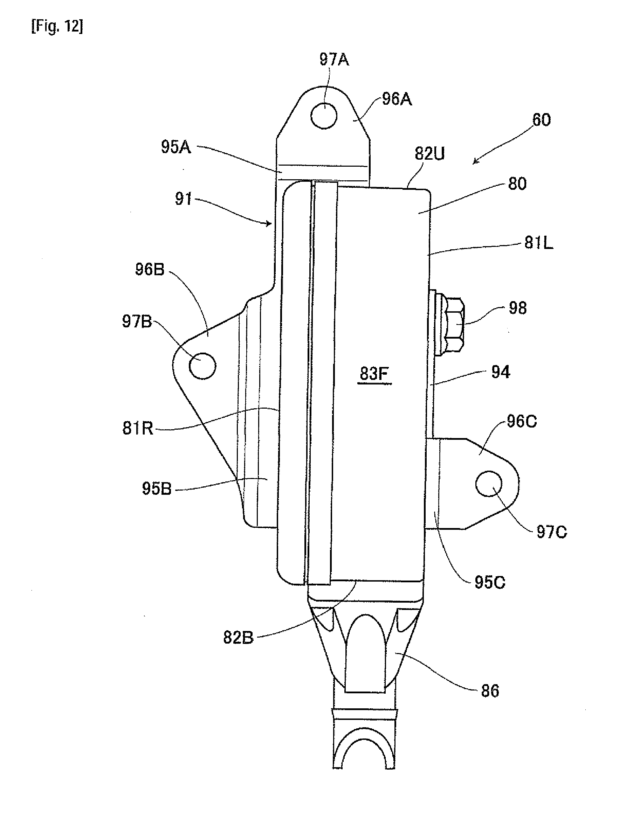

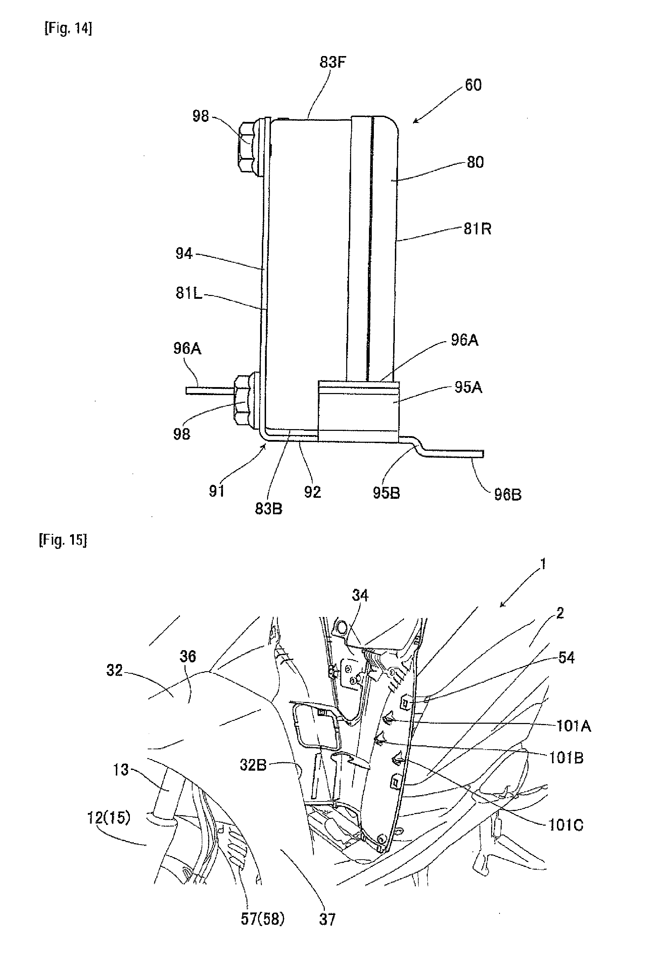

The mounting member 91 integrally includes a rear surface portion 92 arranged substantially in parallel to the rear surface 83B, a body mounting strip 94 having through holes 93 that allow insertion of the both male screws 84, 84 and arranged along the left side surface 81L, and first to third body mounting strips 96A, 96B, 96C connected to the rear surface portion 92 by first to third bent portions 95A, 95B, 95C. The first bent portion 95A extends along the upper surface 82U, a front edge of the first bent portion 95A is bent upward to form the first mounting strip 96A. The second bent portion 95B is formed into a stepped shape and the second mounting strip 96B (see Fig. 14) is formed on a rear side of the rear surface portion 92 by the second bent portion 95B. The second mounting strip 96B is formed substantially in parallel with the rear surface portion 92, and the third bent portion 95C extends along the left side surface 81L. The third mounting strip 96C is formed by bending a front edge of the third bent portion 95C leftward. The first to third mounting strips 96A, 96B, 96C are respectively formed with first to third through holes 97A, 97B, 97C. As shown in Fig. 12, the first through hole 97A is arranged on an upper portion of the case 80, the second through hole 97B is formed on the right side of the case 80 at the center in the height direction, and the third through hole 97C is arranged below the second through hole 97B on the left side of the case 80.

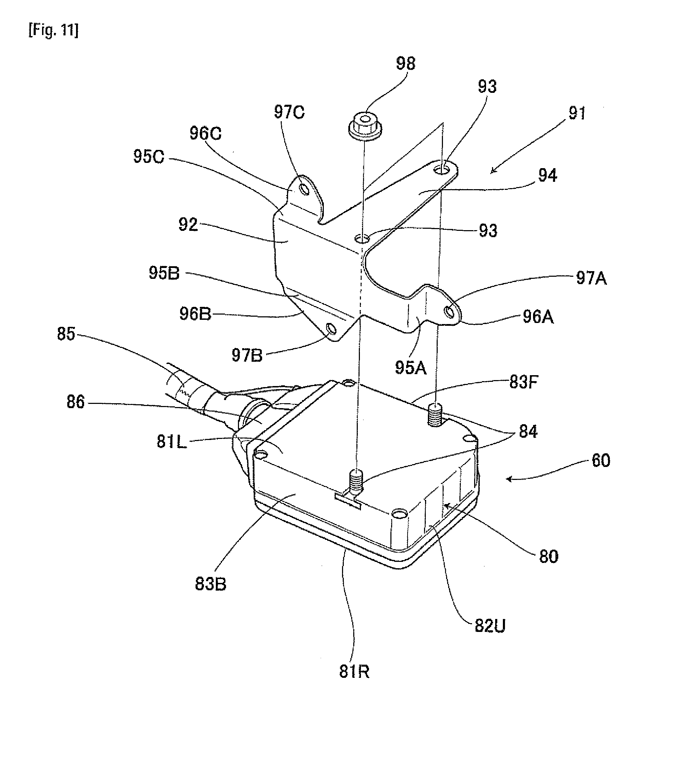

As shown in Fig. 11 and fig .16, the mounting member 91 is fixed to the case 80 by screwing flanged nuts 98 to the male screws 84 inserted through the through holes 93. Provided on the inner surface of the rear cover 34 are first to third boss portions 101A, 101B, 101C as mount receiving portions so as to project therefrom at positions corresponding to the first to third through holes 97A, 97B, 97C. The antitheft device body 60 is fixed to the inner surface of the rear cover 34 by inserting screws 102 as fixing members into the first to third through holes 97A, 97B, 97C and screwing the screws 102 into the first to third boss portions 101A, 101B, 101C. In this fixed state, as shown in Fig. 2, the antitheft device body 60 is located at a position hidden by the inner cover 33 and the side surface portion 37 of the outer cover 32 in front view, and an upper portion of the antitheft device body 60 is located at the same level as the hole portion 41. The antitheft device body 60 is positioned above the heightwise center of the inner cover 33, and positioned above the uppermost vent hole 57.

A locking mechanism (not shown) configured to lock the steering by the bar handle 13 at a position where the front wheel 3 is steered to the left side is provided, and the locking mechanism is capable of mechanically fixing the bar handle 13 and operating a locking unit provided on the side of the vehicle body 2 by a key operation, or locking and unlocking the same by remote locking operation using infrared ray signals.

Subsequently, an operation of the above-described configuration will be described. As shown in Fig. 2 and Fig. 4, when the front wheel 3 is directed leftward and the steering is locked, the device body 60 side of the hole portion 41 is closed by the front portion 22 of the mudguard 21. Although there is a gap between an outer surface (upper surface) of the mudguard 21 and the hole portion 41, the device body 60 is not visible from this gap, and the gap does not allow insertion of a hand into the front body 31. In addition, even when a tool is inserted from the gap, the tool cannot come into contact with the device body 60 or the harness 85, so that there is no risk of removal of the device body 60 from the hole portion 41 using the tool.

As described thus far, in this example, in a mounting structure of the antitheft device for the saddle-type vehicle used in the motorcycle 1 as a saddle-type vehicle including the steering device 11 having the bar handle 13 as a handle and configured to steer the front wheel 3, the mudguard 21 provided on the steering device 11 on the upper portion of the front wheel 3, and the front body 31 formed with the hole portion 41 in which the steering device 11 is steerably and loosely inserted so as to face the front wheel 3 and including the space 35 in the interior thereof, the antitheft device body 60 is accommodated in the space 35, and the antitheft device body 60 is arranged on the side to which the front portion 22 of the mudguard 21 approaches the hole portion 41 when the steering of the bar handle 13 is locked as described in Claim 1. Therefore, the front portion 22 of the mudguard 21 covers the hole portion 41 when the steering of the bar handle 13 is locked and the hand cannot be inserted into the hole portion 41 from the locked side, thereby preventing the antitheft device body 60 from being removed or disabled. In this manner, the mounting structure of the antitheft device body 60 which avoids reaching of the hand from the outside further reliably is obtained using the handle locking mechanism which is a basic antitheft device provided on most of the saddle-type vehicles which travel on public roads.

Also, in this example, the front body 31 includes the inner cover 33 formed with the hole portion 41 in which the steering device 11 is steerably and loosely inserted so as to face the front wheel 3, the rear cover 34 provided rearward of the inner cover 33, and the outer cover 32 provided sideward of the inner cover 33 and the rear cover 34, and the space 35 is formed between the inner cover 33, the rear cover 34 and the outer cover 32 as described in Claim 2. Accordingly, the antitheft device body 60 can be mounted using the space 35 between the inner cover 33, the rear cover 34 and the outer cover 32, and the superior antitheft property is achieved by accommodating the antitheft device body 60 in the closed space 35.

In this example, the mudguard 21 is fixed to the steering stem 17, which is the upper side of the spring of the shock absorber provided on the steering device 11, and the mudguard 21 is provided at the position substantially corresponding to the heightwise position of the hole portion 41 as described in Claim 3. Therefore, since the heightwise positions of the mudguard 21 and the hole portion 41 do not change even when the front wheel 3 is moved upward and downward with respect to the front body 31, so that the antitheft property using the mudguard 21 is secured.

In this example, the antitheft device body 60 is arranged in front swelled portion 39 provided in the space 35 as described in Claim 4. Therefore, the space 35 in the front body 31 can be effectively utilized.

In this example, the rear cover 34 is demountably mounted on the outer cover 32, and the antitheft device body 60 is fixed to the inner surface of the rear cover 34 as described in Claim 5. Therefore, the mounting operation of the antitheft device body 60 can be performed easily by fixing the antitheft device body 60 to the rear cover 34 and assembling the rear cover 34 to the outer cover 32.

Also, in this example, the radiator 59 as an on-vehicle component is accommodated in the lower portion of the space 35, and the antitheft device body 60 is arranged in the upper portion of the space 35 as described in Claim 6. Therefore, the entire space 35 can be effectively utilized by accommodating the antitheft device body 60 in the upper portion of the space 35 avoiding the lower portion thereof where the radiator 59 is accommodated.

Also, in this example, the on-vehicle component is the radiator 59, and the vent holes 57 are formed on the lower portion of the inner cover 33, and the antitheft device body 60 is arranged upward of the position of the vent holes 57 as described in Claim 7. Therefore, by arranging the antitheft device body 60 at a position away from the radiator 59 which diffuses heat, the antitheft device body 60 is prevented from receiving the heat from the radiator 59 side and from being affected by rain or wind through the vent holes 57, whereby the reliability of the operation of the antitheft device body 60 is secured.

Also, as an effect of the example, the outer cover 32 is formed with the plural locking claws 53, which are one of the locking portions and the locked portions which allow the locking portions to lock freely, the rear cover 34 is formed with the plural locked portions 54, which is the other one of those, and the screws 56 as fixing units for fixing the rear cover 34 to the outer cover 32 are provided. Therefore, the device body 60 can be mounted easily afterwards by removing the rear cover 34 from the outer cover 32.

The mounting member 91 integrally includes the first to third body mounting strips 96A, 96B, 96C, and the first to third body mounting strips 96A, 96B, 96C are arranged at positions of apexes of a triangle, and the first to third boss portions 101A, 101B, 101C as the mounted portion are formed on the inner surface of the rear cover 34 so as to be projected therefrom. Therefore, the antitheft device body 60 can be stably mounted on the rear cover 34. Also, since the antitheft device body 60 is located at the position hidden by the inner cover 33 and the side surface 37 of the outer cover 32 in front view in a fixed state, the antitheft device body 60 is less affected even when the rain or the like enters the hole portion 41, and higher antitheft property is achieved. Since the antitheft device body 60 is positioned above the heightwise center of the inner cover 33, the lower space of the space 35 can be effectively utilized.

The invention is not limited to the example described above, and various modifications may be made within the scope of the invention. For example, the inner cover and the outer cover separate from each other may be integrated, or the inner cover and the outer cover may be molded integrally. The upper side of the spring is not limited to the steering stem, and the mudguard may be fixed to other members of the steering device. In addition, the on-vehicle component provided in the lower portion of the space is not limited to the radiator, and other on-vehicle components may be provided. In Claim 1, the antitheft device body may need only be arranged on the right side (the left side of the vehicle body) in Fig. 1 with respect to a vertical center line (not shown) of the front body in Fig. 1 and is preferably arranged in the upper portion as in the example.

### [Reference Numerals]

- 1: motorcycle (saddle-type vehicle)
- 2: vehicle body
- 3: front wheel
- 11: steering device
- 17: steering stem (upper side of spring)
- 21: mudguard
- 22: front portion
- 31: front body
- 32: outer cover
- 32F: front opening
- 32B: rear opening
- 33: inner cover
- 34: rear cover
- 35: space
- 39: front swelled portion
- 41: hole portion
- 57: vent holes
- 59: radiator (on-vehicle component)
- 60: antitheft device body

## Claims

1. A mounting structure of an antitheft device used for a saddle-type vehicle comprising:
a steering device (11) having a handle and configured to steer a front wheel (3);
a mudguard (21) provided on the steering device (11) over an upper portion of the front wheel (3); and
a front body (31) having a hole portion (41) in which the steering device (11) is steerably and loosely inserted so as to face the front wheel (3) and a space (35) in the interior thereof,
**characterized in that** an antitheft device body (60) is accommodated in the space (35), and the antitheft device body (60) is arranged on the side to which a front portion (22) of the mudguard (21) approaches when the steering of the handle is locked,
**in that** the front body (31) includes an inner cover (33) formed with the hole portion (41) in which the steering device (11) is steerably and loosely inserted, the hole portion (41) being formed so as to face the front wheel (3), a rear cover (34) provided rearward of the inner cover (33), and an outer cover (32) provided sideward of the inner cover (33) and the rear cover (34), and the space (35) is defined by the inner cover (33), the rear cover (34), and the outer cover (32),
and **in that** the front portion (22) of the mudguard (21) covers the hole portion (41) and the antitheft device body (60) in the direction of height.

2. mounting structure of the antitheft device used for the saddle-type vehicle according to Claim 1, **characterized in that** the mudguard (21) is fixed to the upper side of a spring of a shock absorber provided on the steering device (11) and the mudguard (21) is provided at a position substantially corresponding to a heightwise position of the hole portion (41).

3. The mounting structure of the antitheft device used for the saddle-type vehicle according to any one of Claims 1 or 2, **characterized in that** the antitheft device body (60) is arranged in a front swelled portion (39) provided in the space (35).

4. The mounting structure of the antitheft device used for the saddle-type vehicle according to Claim 1, **characterized in that** the antitheft device body (60) is fixed to an inner surface of the rear cover (34).

5. The mounting structure of the antitheft device used for the saddle-type vehicle according to Claim 1, **characterized in that** an on-vehicle component is accommodated in a lower portion of the space (35), and the antitheft device body (60) is arranged in an upper portion of the space (35).

6. The mounting structure of the antitheft device used for the saddle-type vehicle according to Claim 5, **characterized in that** the on-vehicle component is a radiator (59), the inner cover (33) is formed with a vent hole (57) on a lower portion thereof, and the antitheft device body (60) is arranged upward of a position of the vent hole (57).

## Patentansprüche

1. Montagestruktur einer Anti-Diebstahl-Vorrichtung zur Verwendung in einem Fahrzeug vom Satteltyp, umfassend:
eine Lenkvorrichtung (11), welche einen Griff aufweist und dazu eingerichtet ist, ein Vorderrad (3) zu lenken;
ein Schutzblech (21), welches an der Lenkvorrichtung (11) über einem oberen Abschnitt des Vorderrads (3) bereitgestellt ist; und
einen vorderen Körper (31), welcher einen Lochabschnitt (41), in welchem die Lenkvorrichtung (11) lenkbar und lose eingesetzt ist, so dass sie zu dem Vorderrad (3) weist, und einen Raum (35) in dem Inneren davon aufweist,
**dadurch gekennzeichnet, dass** ein Anti-Diebstahl-Vorrichtungskörper (60) in dem Raum (35) aufgenommen ist und der Anti-Diebstahl-Vorrichtungskörper (60) an der Seite angeordnet ist, welcher sich ein vorderer Abschnitt (22) des Schutzblechs (21) nähert, wenn das Lenken des Griffs gesperrt ist,
dass der vordere Körper (31) eine innere Abdeckung (33) umfasst,
welche mit dem Lochabschnitt (41) gebildet ist, in welchem die Lenkvorrichtung (11) lenkbar und lose eingesetzt ist, wobei der Lochabschnitt (41) derart gebildet ist, dass er zu dem Vorderrad (3) weist, eine hintere Abdeckung (34) rückwärtig von der inneren Abdeckung (33) bereitgestellt ist und eine äußere Abdeckung (32) seitlich von der inneren Abdeckung (33) und der hinteren Abdeckung (34) bereitgestellt ist, und der Raum (35) durch die innere Abdeckung (33), die hintere Abdeckung (34) und die äußere Abdeckung (32) definiert ist,
und dass der vordere Abschnitt (22) des Schutzblechs (21) den Lochabschnitt (41) und den Anti-Diebstahl-Vorrichtungskörper (60) in der Höhenrichtung bedeckt.

2. Montagestruktur der Anti-Diebstahl-Vorrichtung zur Verwendung in dem Fahrzeug vom Satteltyp nach Anspruch 1, **dadurch gekennzeichnet, dass** das Schutzblech (21) an der oberen Seite einer Feder eines Stoßfängers befestigt ist, welcher an der Lenkvorrichtung (11) bereitgestellt ist, und das Schutzblech (21) an einer Position bereitgestellt ist, welche im Wesentlichen einer Höhenposition des Lochabschnitts (41) entspricht.

3. Montagestruktur der Anti-Diebstahl-Vorrichtung zur Verwendung in dem Fahrzeug vom Satteltyp nach einem der Ansprüche 1 oder 2, **dadurch gekennzeichnet, dass** der Anti-Diebstahl-Vorrichtungskörper (60) in einem vorderen Schwellabschnitt (39) angeordnet ist, welcher in dem Raum (35) bereitgestellt ist.

4. Montagestruktur der Anti-Diebstahl-Vorrichtung zur Verwendung in dem Fahrzeug vom Satteltyp nach Anspruch 1, **dadurch gekennzeichnet, dass** der Anti-Diebstahl-Vorrichtungskörper (60) an einer inneren Fläche der hinteren Abdeckung (34) befestigt ist.

5. Montagestruktur der Anti-Diebstahl-Vorrichtung zur Verwendung in dem Fahrzeug vom Satteltyp nach Anspruch 1, **dadurch gekennzeichnet, dass** eine am Fahrzeug bereitgestellte Komponente in einem unteren Abschnitt des Raums (35) aufgenommen ist und der Anti-Diebstahl-Vorrichtungskörper (60) in einem oberen Abschnitt des Raums (35) angeordnet ist.

6. Montagestruktur der Anti-Diebstahl-Vorrichtung zur Verwendung in dem Fahrzeug vom Satteltyp nach Anspruch 5, **dadurch gekennzeichnet, dass** die am Fahrzeug bereitgestellte Komponente ein Radiator (59) ist, wobei die innere Abdeckung (33) mit einem Belüftungsloch (57) an einem unteren Abschnitt davon gebildet ist, und der Anti-Diebstahl-Vorrichtungskörper (60) oberhalb einer Position des Belüftungslochs (57) angeordnet ist.

## Revendications

1. Structure de montage de dispositif antivol pour véhicule de type à selle comprenant :
un dispositif de direction (11) comportant un guidon et configuré pour diriger une roue avant (3) ;
un garde-boue (21) fourni sur le dispositif de direction (11) au-dessus d'une portion supérieure de la roue avant (3) ; et
un corps avant (31) comportant une portion de trou (41) dans laquelle le dispositif de direction (11) est inséré de manière à pouvoir être orienté sans être serré de façon à faire face à la roue avant (3) et un espace (35) dans l'intérieur de celui-ci,
**caractérisée en ce qu'**un corps de dispositif antivol (60) est logé dans l'espace (35), et le corps de dispositif antivol (60) est agencé sur le côté vers lequel s'approche une portion avant (22) du garde-boue (21) lorsque la direction du guidon est verrouillée,
**en ce que** le corps avant (31) comprend un couvercle intérieur (33) formé avec la portion de trou (41) dans laquelle le dispositif de direction (11) est inséré de manière à pouvoir être orienté sans être serré, la portion de trou (41) étant formée de façon à faire face à la roue avant (3), un couvercle arrière (34) fourni à l'arrière du couvercle intérieur (33), et un couvercle extérieur (32) fourni sur le côté du couvercle intérieur (33) et du couvercle arrière (34), et l'espace (35) est défini par le couvercle intérieur (33), le couvercle arrière (34) et le couvercle extérieur (32),
et **en ce que** la portion avant (22) du garde-boue (21) recouvre la portion de trou (41) et le corps de dispositif antivol (60) dans le sens de la hauteur.

2. Structure de montage de dispositif antivol pour véhicule de type à selle selon la revendication 1, **caractérisée en ce que** le garde-boue (21) est fixé au côté supérieur d'un ressort d'un amortisseur de chocs fourni sur le dispositif de direction (11) et le garde-boue (21) est fourni à une position correspondant sensiblement à une position dans le sens de la hauteur de la portion de trou (41).

3. Structure de montage de dispositif antivol pour véhicule de type à selle selon l'une quelconque des revendications 1 et 2, **caractérisée en ce que** le corps de dispositif antivol (60) est agencé dans une portion enflée avant (39) fournie dans l'espace (35).

4. Structure de montage de dispositif antivol pour véhicule de type à selle selon la revendication 1, **caractérisée en ce que** le corps de dispositif antivol (60) est fixé à une surface intérieure du couvercle arrière (34).

5. Structure de montage de dispositif antivol pour véhicule de type à selle selon la revendication 1, **caractérisée en ce qu'**un composant sur véhicule est logé dans une portion inférieure de l'espace (35), et le corps de dispositif antivol (60) est agencé dans une portion supérieure de l'espace (35).

6. Structure de montage de dispositif antivol pour véhicule de type à selle selon la revendication 5, **caractérisée en ce que** le composant sur véhicule est un radiateur (59), le couvercle intérieur (33) est formé avec un trou de mise à l'air (57) sur une portion inférieure de celui-ci, et le corps de dispositif antivol (60) est agencé en haut d'une position du trou de mise à l'air (57).
